# EUROPEAN PATENT APPLICATION

(11) **EP 3 889 936 A1**
(43) Date of publication of application: **06.10.2021**
(21) Application number: 21166672.2
(22) Date of filing: 01.04.2021
(51) Int. Cl.: G08B 25/10, G06F 8/65, G08B 25/14

(54) **SYSTEM AND METHOD FOR UPGRADING AN ALARM SYSTEM**

(30) Priority: 01.04.2020 GB 202004806
(71) Applicant: Essence Security International (E.S.I.) Ltd., 4672530 Herzlia Pituach (IL)
(72) Inventor: Amir, Ohad, 4642300 Herzliya (IL); Karsenty, Yaakov, 7174704 Modiin (IL)
(74) Representative: Bryer, Pamela Ruth

(57) **Abstract**

A kit for assembling an upgraded control hub (300) of an alarm system is disclosed. The kit comprises a control hub for upgrading, the control hub comprising: a first cellular communication means for communicating with one or more remote devices; a memory (215) having code stored thereon, the code comprising software, wherein one or more functions for controlling an alarm system are defined at least in part by the software; and a first processor (205) configured to process the code. The kit also comprises an apparatus (305) for incorporation into the control hub, the apparatus comprising: a second processor (310); and a second cellular communication means (315) for communicating with one or more remote devices; wherein the apparatus is configured for coupling the second processor to the first processor. The kit also comprises storage hardware having upgrade code stored thereon for configuring the second processor to execute at least one of the one or more functions.

## Description

### TECHNICAL FIELD

The present invention relates to the field of alarm systems such as premises alarm systems, and in particular to systems and methods for upgrading such alarm systems.

### BACKGROUND

Security systems, such as alarm systems and monitoring systems, may be employed to monitor and/or secure premises. Such systems may comprise communications hardware, allowing communication between a system controller, known as a 'control hub' and one or more peripheral devices.

Such systems and/or the one or more peripheral devices may be physically installed in premises. For example, a premises alarm system may comprise a plurality of sensors, such as PIR sensors and/or other sensors, coupled to a control hub. The plurality of sensors may be configured to sense and/or verify information about an environment being monitored by the alarm system, and relay such information to the control hub.

The control hub may also comprise means to communicate with a further, remote device. Communication with the further device may, for example, be for purposes of configuring the control hub and/or receiving notifications from the control hub. For example, the control hub may communicate to the further device that an alarm has been triggered.

Over time, one or more components of such an alarm system may become obsolete. For example, protocols used to communicate between the control hub and the further remote device may become outdated. As such, it may become necessary to replace the control hub in order to upgrade capabilities and/or functionality of the alarm system.

It is an aim of the invention to at least ameliorate one or more of the above or other shortcomings of prior art and/or to provide a useful alternative.

In particular, it is an aim of at least one embodiment of at least one aspect of the present invention to provide a technically, commercially and practically feasible means to upgrade an alarm system.

### SUMMARY

As components of an alarm system become outdated or obsolete it may, in some instances, be practical to physically replace a hardware portion of the alarm system. For example, it may in some instances be possible to upgrade a communications hardware portion of the alarm system to ensure that the alarm system remains capable of communicating with remote device(s). Such an upgrade may effectively extend a useable life of an alarm system, advantageously reducing costs.

An extent to which an alarm system may be upgraded may be practically limited. For example, upgrading core components of the alarm system, such as central processing units of the alarm system, may be too complex, costly and time consuming to be commercially and practically feasible.

According to a first aspect of the present disclosure there is provided a method of upgrading a control hub for an alarm system, the method comprising a step of incorporating into the control hub an apparatus for upgrading the control hub, the control hub comprising: a first cellular communication means for communicating with one or more remote devices; a memory having code stored thereon, the code comprising software, wherein one or more functions for controlling an alarm system are defined at least in part by the software, and a first processor configured to process the code. The apparatus comprises a second processor and a second cellular communication means for communicating with one or more remote devices, and coupling the second processor to the first processor.

The method also comprises a step of receiving upgrade code from storage hardware and using said upgrade code to configure the second processor to execute at least one of the one or more functions.

Advantageously, implementation of such a method may enable an upgrading of the control hub, thereby potentially extending a useable life-span of the control hub, and more generally of the alarm system. Furthermore, implementation of such a method may provide additional or upgraded features to the control hub.

Beneficially, configuration of the second processor using the upgrade code may increase a flexibility and functionality of the upgraded control hub. Furthermore, any resultant cooperation between the first processor with the second processor may, for example, provide further options for distributing, or redistributing, functionality between the first processor and the second processor, to enhance an overall performance and/or functionality of the alarms system. For example, in one embodiment, tasks or functions performed by the first processor before the upgrade may, after upgrade of the control hub with the disclosed apparatus in accordance with the above method, be performed by the second processor, or may be performed by the first processor under control or supervision of the second processor. In this manner, the second processor may complement and/or supplement the first processor.

Further embodiments relating to a distribution of tasks and/or functions between the first processor and the second processing are described in more detail below.

It will be appreciated that the control hub may be for an alarm system, such as premises alarm system. For example, the control hub may be for an alarm system that comprises, among other things, functionality for sensing and/or verifying information about an environment being monitored by the alarm system.

The apparatus may comprise a Printed Circuit Board (PCB). The apparatus may comprise an interposer. The apparatus may be provided as a module, such as an encased or enclosed module. The apparatus may be provided as an expansion card or module. The apparatus may comprise at least one connector and/or interface. For example, in some embodiments the apparatus may be provided as, or may conform to, a PCIe module.

The apparatus may be configured for coupling to the control hub via at least one connector and/or cable. The apparatus may be adapted, or may be adaptable, to fit or conform to the control hub.

The apparatus may be adapted, or may be adaptable, to be incorporated into the control hub. That is, in particular embodiments, the apparatus may be installed or fitted within an enclosure or housing of the control hub. An exterior view of an upgraded control hub may be visually identical to an exterior view of the control hub before upgrading.

The first and/or second processor may comprise at least one of: a Microcontroller (MCU) and/or microprocessor (MPU) and/or Application Specific Integrated Circuit (ASIC) and/or Field Programmable Gate Array (FPGA), or the like.

The first and/or second processor may comprise at least one memory device such as a volatile and/or non-volatile memory device. The at least one memory device may be communicably coupled to the MCU, MPU, ASIC, FPGA or the like.

The second cellular communication means may be coupled to the second processor. The second cellular communication means may be configured to be controlled by the second processor. As described below in more detail, the upgrade code may configure the second processor to communicate with one or more remote devices via the second cellular communication means.

The second processor may be provided as a module or integrated device comprising the second cellular communication means, and the integrated device may optionally provide resources that are shared by the second processor and the second cellular communication means. Alternatively, the second processor and the second cellular communication means may be provided as discrete devices, coupled via an interposer, a printed circuit board, or any suitable connector or interface. By means of example only, in some embodiments the second processor and the second cellular communication means may collectively be provided as a 4G LTE Module such as an LE910Cx series module from Telit Communications PLC, with AppZone enabled.

The one or more remote devices may, for example, comprise an offsite server. Such a remote device may be configured to receive and/or process data received from the first or second cellular communication means. For example, the remote device may be an offsite server that handles alarm notifications from the control hub, communicated using the first or second cellular communication means.

The memory having the code comprising the software may further comprise first configuration data, and the upgrade code may comprise second configuration data for use by the second processor. As will be appreciated, the software may comprise firmware.

The first configuration data may comprise data corresponding to, for example, a configuration of an alarm system. For example, the first configuration data may comprise data corresponding to settings input to the control hub, via a user interface, remotely, or the like, that determine a functionality and/or operation of the alarm system. For example, the first configuration data may comprise data corresponding to one or more pin codes, identification codes, address information, user information, or the like.

The first configuration data may comprise data corresponding to rules, tasks or functions defining a behaviour and/or configuration of the alarm system. For example, the behaviour may be a behaviour in response to one or more signals from one or more peripheral devices, such as one or more peripheral devices coupled to the control hub, and in particular to the first processor. Furthermore, the first configuration data may comprise data corresponding to a configuration of the one or more peripheral devices.

The second configuration data may comprise data provided in a format corresponding to a text format. For example, the first configuration data may comprise data provided to the control hub via a user interface, such as a button inputs or a graphical user interface on an app installed on a mobile device, or the like. Said data may, for example, be provided in an ASCII format. Said data may be stored in a format corresponding to the ASCII format, or otherwise re-encoded, encrypted, or the like.

Similarly, the second configuration data may correspond to the same or similar features, functions, rules, tasks or the like as the first configuration data. Furthermore, the second configuration data may comprise data in a different format the first configuration data.

For example, in some embodiments the first configuration data may be stored as an embedded structure, e.g. a header file, a library file or a file linked to a compiled binary image, defining a memory map that maps parameters to specific memory addresses, whereas the second configuration data may be provided in an XML format, or other separately manageable and updateable database. The second configuration data may comprise data provided in a format optimised for use by an application running on a Linux operating system.

In particular, the second configuration data may comprise data in a format suitable for reading, processing, updating and/or generally accessing by the second processor executing the upgrade code.

The second configuration data may be stored in, or arranged as, a database.

The second configuration data may at least partly correspond to the first configuration data.

That is, the second configuration data may comprise data that may be used to configure one or more peripheral devices in substantially the same way as the first configuration data may configure said peripheral devices. For example, even though the first and second configuration data may be in a different format, at least a portion of the data may correspond to substantially a same configuration of at least part of an alarm system. In some embodiments, a majority or even all of the configuration effected by use of the first configuration data is retained by use of the second configuration data.

In some embodiments, at least a portion of the first configuration data may be copied from a control hub of an alarm system to which the apparatus is being incorporated into, to form part of the second configuration data. A process of copying may comprise parsing, translation and or reformatting, as will be described below in further detail.

In some embodiments, at least a portion of the first configuration data may be retrieved from a storage device storing the first configuration data for the control hub of the alarm system to which the apparatus is being incorporated into, to form part of the second configuration data. For example, the first configuration data (or a copy thereof) may be stored remote from the control hub, on a remote server, a cloud storage system, or the like.

In some embodiments, following upgrading of the control hub, at least a portion of the second configuration data may be stored remote from the control hub, such as on an offsite server, on the storage hardware, or the like.

In a particular embodiment, the control hub may be upgraded in situ at a premises in which the alarm system is installed. In such an embodiment, at least a portion of the first configuration may be copied from the control hub to be upgraded, or downloaded from a remote device, and used to form at least a part of the second configuration data, wherein the second configuration data may be used by the second processor using the upgrade code, e.g. software forming a part of the upgrade code.

The second configuration data may at least partly correspond to configuration data from a different control hub for an alarm system.

In a particular embodiment, a control hub may be upgraded separate from, e.g. at a different location such as a workshop or factory, to the alarm system in which the control hub is to be installed.

In such an embodiment, an original control hub installed in an alarm system may comprise, or be associated with, configuration data. For example, said configuration data associated with the original control hub may be at least partly stored in a memory of the original control hub and/or at least partly stored in storage hardware that may be remote from the original control hub, such as on a remote server, a cloud storage system, or the like.

A control hub that is to be used to replace the original control hub may be upgraded at the different location, e.g. at the workshop or factory. The apparatus may be incorporated into the control hub that is to be used to replace the original control hub at the different location, and upgrade code may be used to configure the second processor to execute at least one of the one or more functions using the configuration data associated with the original control hub. At least a portion of the configuration data associated with the original control hub, in an original or different format, may be downloaded at the different location to the remote storage hardware.

Subsequently, the upgraded control hub may be used to replace the original control hub in the alarm system. That is, the original hub may be removed/uninstalled from the alarm system and the upgraded control hub may be installed in the alarm system. At least a portion of the configuration data associated with the original control hub may be downloaded, in an original or different format, to the upgraded control hub after the upgraded control hub is installed in the alarm system.

The control hub that is to be used to replace the original control hub may be a control hub from a different alarm system.

Furthermore, after the original control hub has been removed/uninstalled, the original control hub may subsequently be upgraded to provide an upgraded control hub for another, different alarm system. For example, the original control hub may be returned to the different location, e.g. the factory or workshop, to be upgraded for another alarm system.

The method may comprising a step of parsing and/or translating and/or reformatting at least a portion of the first configuration data or the configuration data from the different control hub to provide at least a portion of the second configuration data.

That is, the first processor in the original control hub or control hub to be upgraded may process, use, or otherwise read configuration data in a format that differs to a format of configuration data processed, used or otherwise read by the second processor.

Any such process of parsing and/or translating and/or reformatting may be performed by a further processor during a process of upgrading the alarm system. The further processor may be comprised in, for example, a remote server, a cloud storage system, an installation engineer's computer, a computer at the different location, e.g., workshop or factory, or the like.

Such parsing and/or translating and/or reformatting may, for example, comprise providing second configuration data in a format for use by the second processor in an xml format, wherein the second configuration data may at least partly correspond to the first configuration data or the configuration data from the different control hub which may have been provided in a different format.

The method may comprise a step of storing the upgrade code in a memory of the apparatus.

The upgrade code may be downloaded from a remote storage hardware, such as a server or cloud storage system, to be stored in the memory of the apparatus. An intermediate storage device may be used to copy the upgrade code to the memory of the control hub. For example, the intermediate storage device may be a computer at the factory or workshop. The intermediate storage device may be a computer such as an installation engineer's laptop. The intermediate storage device may be a mobile device, such as a cellular phone, or the like.

The upgrade code may be downloaded from the storage hardware, which may be a server, cloud storage system or the like, and stored on the intermediate storage device. The upgrade code may subsequently be copied to be the memory of the apparatus.

The method may comprise a step of storing further code in the memory of the control hub.

The further code may be downloaded from a remote storage hardware, such as a server or cloud storage system, to be stored in the memory of the control hub. The remote storage hardware may be the same remote storage hardware as used to store the upgrade code.

An intermediate storage device may be used to copy the further code to the memory of the control hub. For example, the intermediate storage device may be a computer at the factory or workshop. The intermediate storage device may be a laptop such as an installation engineer's laptop. The intermediate storage device may be a mobile device, such as a cellular phone, or the like.

The further code may be downloaded from the storage hardware, which may be a server, cloud storage system or the like, to be stored on the intermediate storage device. The further code may subsequently be copied to be the memory of the control hub.

The further code may be for reconfiguring the first processor to communicate with the second processor.

The further code may be stored in a memory of the control hub before or after incorporating the apparatus into the control hub. The further code may completely, or only partially, replace original code that was processed by the first processor. The further code may enable communication between the first processor and the second processor over an interface. For example, the further code may be for repurposing an interface of the first processor, as described in more detail below.

The further code may be for reconfiguring the first processor to receive commands from the second processor.

That is, after reconfiguration of the first processor using the further code, the second processor may be configured to execute functions, tasks, routines and/or process rules defined by, under the control of, or triggered by, the second processor. The second processor may issue a command to the first processors to command the first processor to configure or communicate with a peripheral device or component of the alarm system. For example, the second processor may issue a command to the first processor to toggle an LED, to enable/disable a sensor or actuator, to read data from a sensor, to sound an alarm, to control a user interface, or the like.

The control hub may comprise communication lines between the first processor and the first cellular communication means.

The communication lines may form a bus.

The communication lines may couple pads/balls/pins on the first processor, or a package or module comprising the first processor, to pads/balls/pins on the second processor, or a package or module comprising the second processor. The communication lines may couple an interface of the first processor to an interface of the second processor.

The method may comprise a step of communicably coupling the second processor to the communication lines.

The control hub may comprise a first connector, port, or the like. The apparatus may comprise a second connector, port, or the like that corresponds to the first connector, port, or the like of the control hub.

The method may comprise a step of reconfiguring the first processor to use a different protocol for communicating over the communication lines.

For example, the first processor may have originally been configured to communicate over the communication lines using a first protocol, such as a serial protocol. Following reconfiguration of the first processor, the first processor may be configured to communicate over the communication lines using a second protocol, wherein the first protocol is different to the second protocol. The second protocol may utilize a subset of the communication lines. The second protocol may be a proprietary and/or non-industry-standard protocol.

The method may comprise a step of decoupling the first cellular communication means from the control hub.

The first cellular communication means may be coupled, e.g. communicably coupled, to the communication lines. As such, the method step of incorporating the apparatus into the control hub may comprise decoupling the first cellular communication means from the communication lines and subsequently coupling the second processor to the communication lines.

The first cellular communication means may be a 3G communication means. The second cellular communication means may be a 4G, LTE or 5G cellular communication means.

In other embodiments the first communication means may be a 3G, 4G, LTE or 5G cellular communication means, and the second communication means may be a subsequent generation cellular communication means, e.g. an cellular communications upgrade from 3G to 4G, or from LTE to 5G, or the like.

The upgrade code may be received by a processing device, wherein the processing device may be configured to store the upgrade code in the memory of the apparatus.

The processing device may be, for example, an intermediate computer such as an engineer's laptop or computer, or a computer at a facility, factory or workshop where the control hub is upgraded.

In some embodiments, the upgrade code may be received by the processing device from the storage hardware, e.g. a remote server or the like. The processing device may then be coupled to the apparatus to store the upgrade code in the memory of the apparatus.

The memory of the apparatus may be a non-volatile memory, such as a flash memory. The memory of the apparatus may be integrated with the second processor, or incorporated into a module or package with the second processor, or otherwise coupled to the second processor via an interposer, printed circuit board or any other suitable interface.

The control hub may comprise a first further communication means for communicating with one or more further devices.

The first further communication means may be a first RF device, such as an RF transceiver. The one or more further devices may comprise one or more peripheral devices, as described in more detail below.

The apparatus may comprises a second further communication means for communicating with the one or more further devices.

The second further communication means may be a second RF device, such as an RF transceiver. As such, the second RF device may be used to replace, e.g. be provided as an upgrade to, or supplement or complement the first RF device.

The method may comprise a step of uninstalling and/or disabling the first further communication means.

That is, the first further communication means may be physically removed from the control hub, or otherwise disabled such that all wireless communication with the one or more further devices is made via the second further communication means.

The method may comprise a step of configuring the second further communication means to replace or complement the first further communication means. The second further communication means may comprises an RF module for wirelessly communicating with one or more peripheral devices.

The second processor may be configured to control the second further communication means.

The method may comprise a step of reconfiguring the first processor as an I/O processor for controlling I/O (inputs/outputs) of the control hub.

The I/O of the control hub may be coupled to the one or more further devices, e.g. the one or more peripheral devices.

As an I/O processor, the first processor may process software to configure the first processor to interface with one or more peripheral devices that the first processor interfaces with and/or one or more peripheral devices the first processor had, at least prior to its reconfiguration, software for interfacing with (e.g. by controlling a transceiver) . The I/O processor may transfer data between such peripheral devices and the second processor. Such data may include for example, sensed events such as an alarm triggering event, a button press or measured/recorded data from a peripheral device, or commands from the second processors, or the like. As an I/O processor, the first processor may be configured to transfer data to/from I/O in response to commands from, or operations by, the second processor. Similarly, as an I/O processor, the first processor may be configured to react/respond to signal(s) and/or data at an input to the first processor.

The second processor may be a master processor to which the first processor is a slave. That is, the second processor may be configured to control and/or supervise operation of the first processor. In some embodiments, the second processor and the first processor may be provided in an asymmetric multiprocessor configuration, wherein the second processor is configured to execute an operating system.

The first and/or second configuration data may correspond to rules defining a behaviour and/or configuration of the alarm system in response to signals from one or more peripheral devices.

For example, a rule may define an operation of one or more peripheral device in response to data and/or a signal from one or more other of the one or more peripherals devices. In an example, a rule may define that an alarm is sounded in response to a sensor sensing and/or verifying information about an environment being monitored.

In other examples, such rules may define an operation of an alarm state machine that determines when to arm / disarm / partially arm / partially disarm the alarm system;

In other examples, such rules may determine a response to input received via a local RF network (which is used to communicate with the one or more peripherals), such as under what conditions an alarm should be raised or triggered and/or under what conditions an alert or other notification should be transmitted to a remote device, wherein the transmission may be via a cellular communication means.

In further examples, such rules may for example define how signals or data from peripheral devices, such as switches or buttons on the control hub, are to be interpreted, e.g. what the function of said switches or buttons is to be.

In yet further examples, such rules may for example define how LEDs on the control hub are to be operated, e.g. in response to a received input from a switch or button.

In yet further examples, the first and/or second configuration data may additionally or alternatively define parsing of local RF communications, e.g. RF communication between the first further communication means and/or second further communication means and one or more of the peripheral devices.

In yet further examples, the first and/or second configuration data may additionally or alternatively define or correspond to encryption keys, or a use of encryption keys.

In yet further examples, the first and/or second configuration data may additionally or alternatively define or correspond to information about one or more users of the alarm system.

In yet further examples, the first and/or second configuration data may additionally or alternatively define or correspond to electronic communication addresses, e.g. IP addresses, of any device(s) with which the control hub is to communicate over the (cellular) communications hardware, such as the one or more remote devices.

In yet further examples, the first and/or second configuration data may additionally or alternatively define or correspond to pin codes, such as pin codes defined by a user of the alarm system.

In yet further examples, the first and/or second configuration data may additionally or alternatively define or correspond to identification codes of the one or more peripheral devices.

In yet further examples, the first and/or second configuration data may additionally or alternatively define or correspond to dial sequence information, e.g. a script. The dial sequence information may define an order of devices (identified by electronic communication addresses) to report an event. A reported event may comprise, for example, an alarm notification. A reported event may comprise, for example, information relating to an indication of communications that are outgoing from the alarm system. A reported event may comprise, for example, an indication of which communication means are used for communications that are outgoing from the alarm system, e.g. the first or second cellular communications hardware, the WLAN, or the like.

The first and/or second configuration data may correspond to a configuration of one or more peripheral devices coupled to the processor and/or the processing circuitry.

For example, the first and/or second configuration data may correspond to encryption keys and/or pin codes and/or identification codes and/or address information and/or user information.

For example, the first and/or second configuration data may correspond to a process of parsing data packets received by one or more peripheral devices.

For example, the first and/or second configuration data may correspond to a state machine and/or script defining an operation of the processor and/or the processing circuitry.

For example, the first and/or second configuration data may correspond to dial sequence information.

The second processor may be a more powerful processor than the first processor.

That is, the second processor may be configured provide greater computational capabilities than the first processor. As such, the incorporation of the second processor into the control hub may provide a substantial overall increase to a performance and/or capability of the control hub.

The second processor may be configured to execute one or more functions that the first processor may not have been configured to execute prior to incorporating the apparatus into the control hub.

That is, the upgrade code may configure the second processor to execute one or more functions that the first processor may not have been configured to execute prior to incorporating the apparatus into the control hub, thus enhancing an overall functionality of the control hub.

The one or more functions may comprise functions relating to communication using HTTPS and/or MQTT.

In an example embodiment, the one or more functions may configure the second and/or first processor as an MQTT client. The one or more remote devices (e.g. a remote server) may be configured as an MQTT broker to which the MQTT client subscribes.

According to a second aspect of the present disclosure, there is provided a method of upgrading an alarm system, the method comprising a step of operatively replacing an original control hub for the alarm system with an upgraded control hub for the alarm system, wherein the upgraded control hub is a control hub that been upgraded according to the method of the first aspect.

The upgraded control hub may comprise configuration data at least partly corresponding to configuration data from the original control hub.

According to a third aspect of the present disclosure, there is provided a kit for assembling an upgraded control hub of an alarm system. The kit comprises a control hub for upgrading, the control hub comprising: a first cellular communication means for communicating with one or more remote devices; a memory having code stored thereon, the code comprising software, wherein one or more functions for controlling an alarm system are defined at least in part by the software; and a first processor configured to process the code.

The kit also comprises an apparatus for incorporation into the control hub, the apparatus comprising: a second processor; and a second cellular communication means for communicating with one or more remote devices; wherein the apparatus is configured for coupling the second processor to the first processor.

The kit also comprises storage hardware having upgrade code stored thereon for configuring the second processor to execute at least one of the one or more functions.

The memory further may comprise first configuration data. The upgrade code may comprise second configuration data for use by the second processor.

The second configuration data may at least partly correspond to the first configuration data.

The second configuration data may at least partly correspond to configuration data from a different control hub for an alarm system.

The apparatus may comprise a memory for storing the upgrade code and/or the second configuration data.

The memory may comprise a volatile memory and/o a non-volatile memory, such as a flash memory, an EEPROM, or the like.

The control hub may comprise communication lines between the first processor and the first cellular communication means.

The apparatus may comprise means for communicably coupling the first processor to the communication lines.

The kit may comprise further code for storing in the memory of the control hub to reconfigure the first processor to communicate with the second processor.

The kit may comprise further code for storing in the memory of the control hub to reconfigure the first processor to receive commands from the second processor.

The further code may be for changing a communication protocol used to communicate over the communication lines.

The first processor may be configured to communicate with the first cellular communication means using AT commands.

The term "AT commands" may refer to the Hayes Command Set.

Following upgrading of a control hub with the disclosed apparatus, and following a repurposing of the communication lines as described above, the first processor may no longer be configured to communicate using AT commands.

That is, the second cellular communication means may be for replacing the first cellular communication means. The second cellular communication means may not be configured to communicate using AT commands.

The storage hardware may be remote from the apparatus.

For example, the storage hardware may comprise a remote server. The storage hardware may comprise may be a hard disk, a flash memory, a portable storage device, or the like. The storage hardware may a cloud-based system.

In an alternative embodiment, the apparatus may comprise the storage hardware. For example, the storage hardware may be a non-volatile memory disposed in a same PCB as the first processor.

The storage hardware may be distributed. That is, the storage device may comprise a plurality of storage devices that be co-located, or located separately.

The control hub may comprise first further communication means for communicating with one or more further devices. The first further communication means may comprise an RF transceiver.

The apparatus may comprise second further communication means for communicating with the one or more further devices. The second further communication means may comprise a further RF transceiver.

The one or more further devices may comprise at least one of: a camera, a motion sensor, a door sensor, a window sensor, a lock, an alarm sounder, a passive infrared sensor, a touchscreen, a display, a speaker, a microphone, a light; user interface; a radio transceiver, a non-volatile memory; a volatile memory; and/or an actuator.

The second further communication means may comprise a transceiver for a wireless personal area network (WPAN) coupled to the second processor.

The WPAN may be Low Rate WPAN conforming to IEEE standard 802.15.4.

The second further communication means may comprise a transceiver for a wireless local area network (WLAN) coupled to the second processor.

The upgrade code may configure the second processor to operate a rules engine.

The upgrade code may configure the second processor to execute the one or more functions to control interaction between the second processor and the one or more further devices.

The one or more functions and/or the first and/or second configuration data may correspond to rules defining a behavior and/or configuration of the alarm system in response to signals from one or more peripheral devices.

The one or more functions and/or the first and/or second configuration data may correspond to a configuration of one or more peripheral devices coupled to the processor and/or the second processor.

The one or more functions and/or the first and/or second configuration data may correspond to encryption keys and/or pin codes and/or identification codes and/or address information and/or user information.

The one or more functions and/or the first and/or second configuration data may correspond to a process of parsing data packets received by one or more peripheral devices.

The one or more functions and/or the first and/or second configuration data may correspond to a state machine and/or script defining an operation of the processor and/or the second processor.

The one or more functions and/or the first and/or second configuration data may correspond to dial sequence information.

The second processor may be configured to communicate via the second cellular communication means using HTTPS and/or MQTT.

The upgrade code may comprise code and/or data defining an operating system for execution by the second processor.

The operating system may be a Linux operating system. The operating system may be real-time operating system.

According to a fourth aspect of the present disclosure, there is provided a system for implementing the method of the first aspect of upgrading a control hub for an alarm system, the system comprising an apparatus for incorporation into a control hub for an alarm system, the apparatus comprising: a processor; and a communication means for communicating with one or more remote devices, wherein the apparatus is configured for coupling the processor to a processor of the control hub.

The system also comprises storage hardware storing upgrade code for configuring the processor to execute one or more functions, wherein the one or more functions correspond to functions executed by the processor of the control hub.

The above summary is intended to be merely exemplary and non-limiting. The disclosure includes one or more corresponding aspects, embodiments or features in isolation or in various combinations whether or not specifically stated (including claimed) in that combination or in isolation. It should be understood that features defined above in accordance with any aspect of the present disclosure or below relating to any specific embodiment of the disclosure may be utilized, either alone or in combination with any other defined feature, in any other aspect or embodiment or to form a further aspect or embodiment of the disclosure.

### BRIEF DESCRIPTION OF THE DRAWINGS

These and other aspects of the present disclosure will now be described, by way of example only, with reference to the accompanying drawings, which are:
- **Figure 1**: a prior art alarm system;
- **Figure 2**: a prior art control hub for an alarm system;
- **Figure 3**: an upgraded control hub for an alarm system, according to an embodiment of the disclosure;
- **Figure 4**: a kit for assembling an upgraded control hub of an alarm system, according to an embodiment of the disclosure;
- **Figure 5**: a method of upgrading a control hub for an alarm system according to an embodiment of the disclosure; and
- **Figure 6**: a further method of upgrading an alarm system according to an embodiment of the disclosure.

### DETAILED DESCRIPTION OF THE DRAWINGS

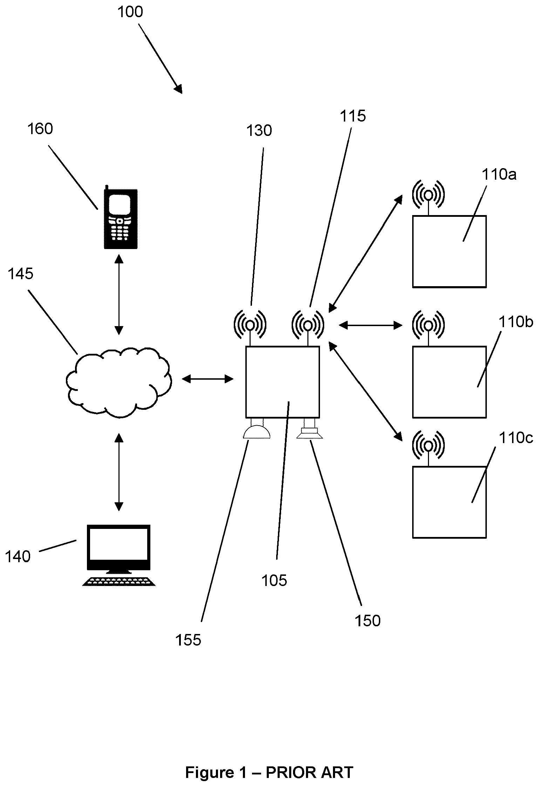

Figure 1 is a schematic diagram depicting a prior art alarm system 100. The system 100 comprises a control hub 105, which is in the art may be, or historically have been, termed a control panel.

The control hub 105 comprises RF communication means. The control hub 105 provides central control of, and data collection from, a plurality of peripheral devices 110a, 110b, 110c, for example by local RF communication. The RF communication means operates in a first frequency band(s), using a local-communication antenna 115 on the control hub 105. Each of the plurality of peripheral devices 110a, 110b, 110c comprises an associated local-communication antenna 125a, 125b, 125c for communication between said peripheral device 110a, 110b, 110c and the control hub 105.

The simplified schematic in Figure 1 depicts only three peripheral devices 110a, 110b, 110c. It will be appreciated that in some instances, there may be more peripheral devices, or that one or more peripheral devices may be conductively coupled, e.g. wired, to the control hub directly.

By means of example, the peripheral devices 110a, 110b, 110c may include Passive Infrared Detectors (PIRs) for detecting motion of a person in a corresponding monitored space with the environment, such as in a specific room. Other peripheral devices may be or may include, for example, presence sensors or other motion sensors, sensors for detecting changes in a state of a door or window, temperature sensors or any other sensor for measuring an environmental condition or an indication relating to a person that may be in the environment. The other peripheral devices may additionally comprise one or more home automation devices, including a smart TV, one or more lights, an air conditioning or heating system a hi-fi sound-system, and the like. The peripheral devices may further include other threat detection devices (e.g. smoke or gas detectors) and/or threat verification devices (e.g. cameras).

The control hub 105 may also comprise one or more peripheral devices. In the example of Figure 1, the control hub 105 comprises a speaker 150 and a microphone 155. It will be appreciated that in alternative system configurations, any of the peripheral devices 110a, 110b, 110c may additionally or alternatively comprise the speaker 150 and/or the microphone 155. The speaker may be used to sound an alarm. Optionally however such a speaker may be additionally or alternatively separate from the control panel and accessed via wired communication, or in other embodiments via the RF communication means.

The control hub 105 comprises a second antenna 130 that is used for communication, in a second frequency band(s), with a remote device 140 via a telecommunications network 145. The second antenna 130 is for cellular communications, e.g. 3G communications or the like. The remote device 140 may be a server. The server may be configured to communicate, in turn, with a Central Monitoring Station (CMS) at which one or more people administer surveillance and provide responses to the surveillance, when necessary, or the CMS may be integrated into the server that is in communication with the control hub 105.

The control hub 105 may additionally or alternatively also communicate via the telecommunications network 145 with another remote device(s) 160, which may be provided in the form of a personal general computing device, such as a laptop, notebook, desktop, tablet, smartphone or the like. The personal computing device 160 may alternatively be a customized computing device intended specifically for the administration of the system 100.

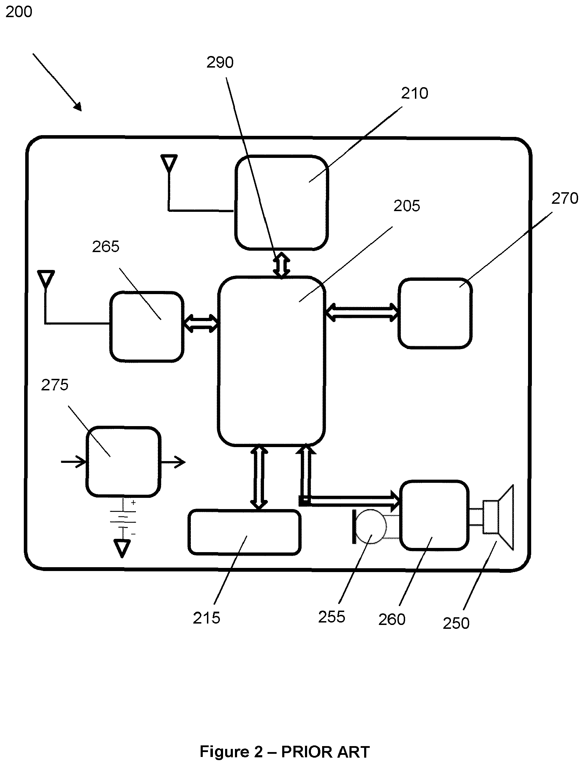

Figure 2 depicts a prior art control hub 200. The control hub 200 may, for example, be the control hub 105 implemented in the system 100 of figure 1. The control hub 200 is suitable for upgrading in accordance with the disclosed methods and system.

The control hub 200 comprises a first cellular communication means 210 for communicating with one or more remote devices, such as remote device 140 or remote device 160 depicted in the example alarm system 100 of Figure 1. In the example of Figure 2, the first cellular communication means 210 is a cellular 3G module, e.g. a module capable of 3G cellular communications.

The control hub 200 comprises a first processor 205. The first processor 205 may comprise at least one of: a Microcontroller (MCU) and/or microprocessor (MPU) and/or Application Specific Integrated Circuit (ASIC) and/or Field Programmable Gate Array (FPGA), or the like.

The first processor 205 is configured for communicating with one or more remote devices (not shown in Figure 2) via the first cellular communication means 210. The one or more remote devices may, for example, comprise an offsite server, e.g. remote device 140. Such a remote device may be configured to receive and/or process data received from the first cellular communication means 210. For example, the remote device may be an offsite server that handles alarm notifications from the control hub 200, communicated using the first cellular communication means 210.

The control hub 200 also comprises a memory 215 having code stored thereon. The memory 215 is communicably coupled to the first processor 205. The memory may, for example, be a flash memory, an EEPROM, or the like. The code comprises software, wherein one or more functions for controlling the alarm system 100 are defined at least in part by the software.

Although the memory 215 is depicted in Figure 2 as a discrete device coupled to the first processor 205, it will be appreciated that in some embodiments the memory 215 may be integrated into the processor 205 as an embedded flash, or integrated into a module comprising the processor 205.

The control hub 200 is for an alarm system 100 that comprises, among other things, functionality for sensing and/or verifying information about an environment being monitored by the alarm system. Furthermore, the control hub 200 may be configured for direct user input and output (I/O), such as for voice activated control and or audio communication with a remote third party. As such, the example control hub 200 comprises a microphone 255 and a speaker 250. The microphone 255 and speaker 250 are coupled to an audio codec 260 for encoding/decoding audio signals and for communication with the first processor 205.

The control hub 200 also comprises a first further communication means 265 for communicating with one or more further devices, e.g. peripheral devices 110a, 110b, 110c as depicted in the system 100 of Figure 1. The first further communication means 265 is a first RF device, e.g. an RF transceiver.

The control hub 200 also comprises a user interface 270. The user interface 270 is communicably coupled to the first processor 205.

In the example of Figure 2, the control hub 200 comprises a battery pack power supply 275. It will be appreciated that in other embodiments, the control hub 200 may be additionally or alternatively mains-power supplied.

The memory 215 comprises first configuration data. The first configuration data may comprise data corresponding to, for example, a configuration of the alarm system 100. For example, the first configuration data may comprise data corresponding to settings input to the control hub 200, via the user interface 270, remotely, or the like, that determine a functionality and/or operation of the alarm system 100. For example, the first configuration data may comprise data corresponding to one or more pin codes, identification codes, address information, user information, or the like.

The first configuration data may comprise data corresponding to rules, tasks or functions defining a behaviour and/or configuration of the alarm system 100. For example, the behaviour may be a behaviour in response to one or more signals from one or more peripheral devices, such as one or more peripheral devices coupled to the control hub, and in particular to the first processor. Furthermore, the first configuration data may comprise data corresponding to a configuration of the one or more peripheral devices 110a, 110b, 110c.

The first configuration data may comprise data provided to the control hub via the user interface 270, such as a button inputs or a graphical user interface on an app installed on a mobile device, or the like.

In some embodiments the first configuration data is stored as an embedded structure, e.g. a header file, a library file or a file linked to a compiled binary image that defines a memory map that maps parameters to specific memory addresses.

The control hub 200 may be provided in a housing or enclosure 245.

The control hub 200 comprises communication lines 290 between the first processor 210 and the first cellular communication means 210.

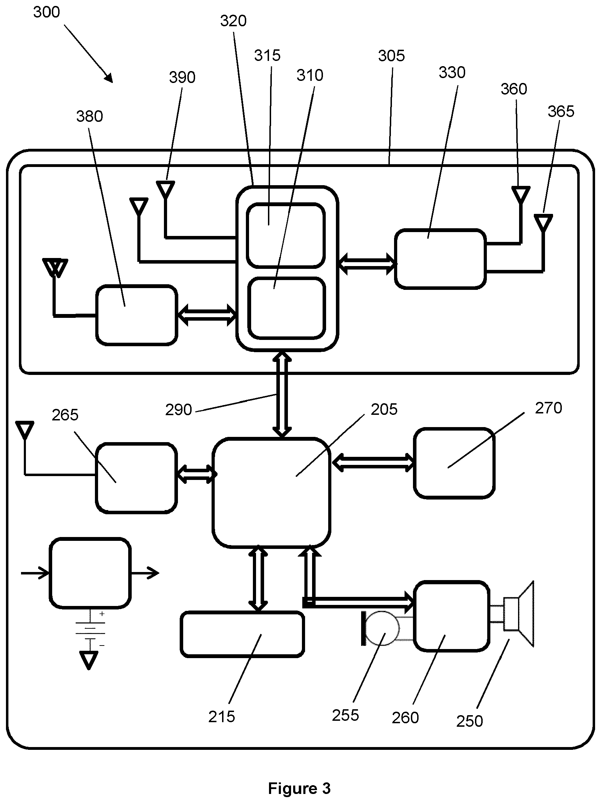

Figure 3 depicts an upgraded control hub 300 for an alarm system, according to an embodiment of the disclosure.

The upgraded control hub 300 corresponds to the control hub 200 of Figure 2, wherein the first cellular communication means 210 has been removed, and an apparatus 305 has been incorporated into the control hub 200. Furthermore, upgrade code has also been used to configure the upgraded control hub 300, as will be described in more detail below.

The apparatus 305 comprises a second processor 310 and a second cellular communication means 315 for communicating with one or more remote devices, e.g. remote devices 140, 160 as depicted in Figure 1.

The apparatus 305 comprises a Printed Circuit Board (PCB). In some embodiments, the apparatus 305 may comprise an interposer. In some embodiments, the apparatus 305 may be provided as a module, such as an encased or enclosed module. In some embodiments, the apparatus 305 may be provided as an expansion card or module.

The second processor 310 is coupled to the first processor 205.

The second processor 310 is provided in a module 320, in the form of a chip, that also comprises the second cellular communication 315 means. In alternative embodiments, the second processor 310 and the second cellular communication means 315 may be provided as discrete devices, coupled via an interposer, a printed circuit board, or any suitable connector or interface.

The second processor 310 comprises at least one of: a Microcontroller (MCU) and/or microprocessor (MPU) and/or Application Specific Integrated Circuit (ASIC) and/or Field Programmable Gate Array (FPGA), or the like.

The module 320 comprises at least one memory device (not shown) such as a volatile and/or non-volatile memory device, coupled to the second processor 310. In some embodiments, the second processor 310 and the at least one memory device may be provided as separate, discrete devices, coupled via an interposer, a printed circuit board, or any suitable connector or interface.

In the example embodiment of Figure 3, the second cellular communication means 315 is a 4G LTE communication means. In the example embodiment, the apparatus 300 comprises LTE diversity antennae 390. It will be appreciated that in other embodiments, the second cellular communication means 315 may be a 5G communication means, or an even later generation cellular communication means.

The apparatus 305 is incorporated into the control hub 200. That is, in particular embodiments, the apparatus 305 is installed or fitted within the enclosure or housing 245 of the control hub 200. As such, an exterior view of an upgraded control hub 300 may be visually identical to an exterior view of the control hub 200 before the upgrade is performed.

The second cellular communication means 315 is coupled to the second processor 310. The second cellular communication means 315 is configured to be controlled by the second processor 310. As described below in more detail, upgrade code may be used to configure the second processor 310 to, amongst other functions, communicate with one or more remote devices, e.g. remote device 140, 160, via the second cellular communication means 315.

As shown in Figure 2, the control hub 200 comprises communication lines 290 between the first processor 210 and the first cellular communication means 210. In the upgraded control hub 300, the communication lines 290 couple the first processor 210, or a package or module comprising the first processor 210, to the module 320, and hence to the second processor 310.

The apparatus 305 also comprises a second further communication means 330 for communicating with one or more further devices. In the example embodiment of Figure 3, the second further communication means 330 is a second RF device, e.g. an RF transceiver. As such, the second further communication means 330 may be used to replace, e.g. be provided as an upgrade to, or supplement or complement the first RF device 265.

In some embodiments, the second further communication means 330 operates in the first frequency band. In some embodiments, the second further communication means 330 may additionally operate in a further frequency band different to the first and second frequency bands, as indicated by the plurality of antennae 360, 365 in Figure 3. As such, the upgraded control hub 300 may be capable of RF communication with further peripheral devices that the original control hub 200 may not have been capable of communicating with, and/or may communication with existing and/or further peripheral devices using an upgraded protocol.

Furthermore, in some embodiments the first further communication means 270 may be physically removed from the control hub 300, or otherwise disabled such that all wireless communication with the one or more further devices is made via the second further communication means 330.

The apparatus 305 comprises a transceiver 380 for a wireless personal area network (WPAN) coupled to the second processor 310. In an embodiment, the WPAN is a Low Rate WPAN conforming to IEEE standard 802.15.4. In an embodiment, transceiver 380 is for a wireless local area network (WLAN) coupled to the second processor 310. In some embodiments, the transceiver 380 is a dual band transceiver, e.g. a 2.4GHz and 5GHz transceiver.

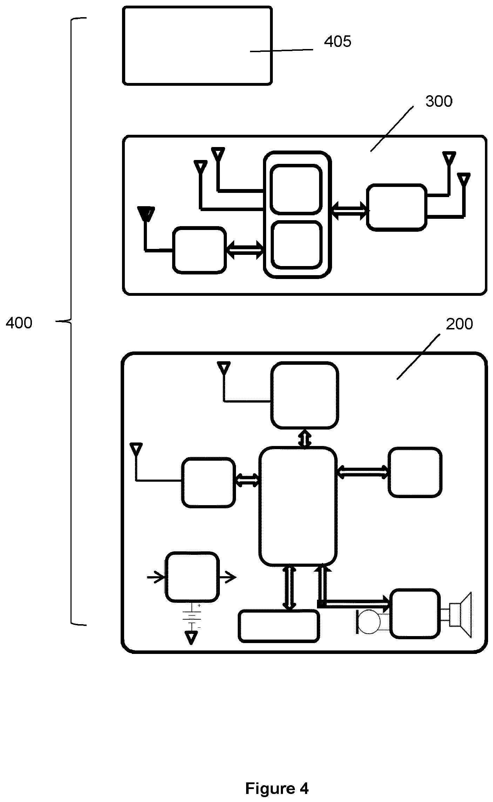

Figure 4 depicts a kit 400 for assembling an upgraded control hub 300 of an alarm system 100, according to an embodiment of the disclosure.

The kit 400 comprises the apparatus 300 as depicted in Figure 3 and as described above.

The kit 400 comprises a control hub 200 to be upgraded, as depicted in Figure 2 and as described above.

The kit 400 comprises storage hardware 405 having upgrade code stored thereon for configuring the second processor 310 to execute at least one of the one or more functions.

In an embodiment, the memory 215 further comprises first configuration data and the upgrade code comprises second configuration data for use by the second processor 310. In an embodiment, the first configuration data comprises data corresponding to, for example, a configuration of the alarm system 100. For example, the first configuration data may comprise data corresponding to settings input to the control hub 200, via the user interface 270, remotely, or the like, that determine a functionality and/or operation of the alarm system 100. For example, the first configuration data may comprise data corresponding to one or more pin codes, identification codes, address information, user information, or the like.

In an embodiment, the first configuration data comprises data corresponding to rules, tasks or functions defining a behaviour and/or configuration of the alarm system 100. For example, the behaviour may be a behaviour in response to one or more signals from one or more peripheral devices 110a, 110b, 110c.

Similarly, in an embodiment the second configuration data corresponds to the same or similar features, functions, rules, tasks or the like as the first configuration data.

The storage hardware 405 may be remote from the control hub 300, such as on a remote server, a cloud storage system, or the like.

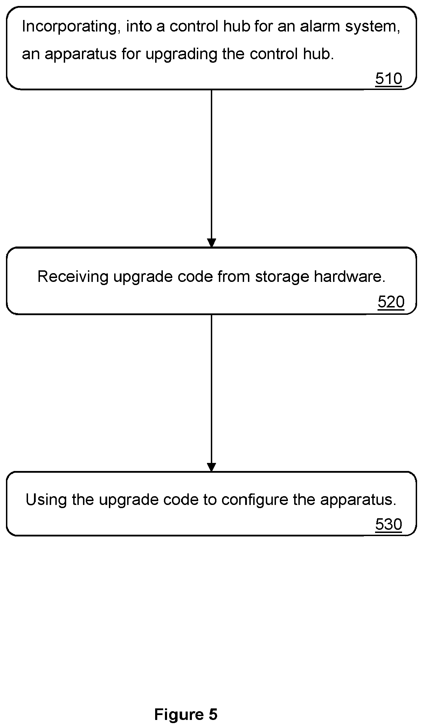

Figure 5 depicts a method of upgrading a control hub for an alarm system 100 according to an embodiment of the disclosure.

The method comprises a first step 510 of incorporating into a control hub 200 an apparatus 305 for upgrading the control hub 200. The first step 510 also includes decoupling the first cellular communication means 210 from the control hub 200.

In an embodiment, the control hub is a control hub 200 as depicted in Figure 2.

In an embodiment, the apparatus is an apparatus 305 as depicted in Figure 3.

The method comprises a second step 520 of receiving upgrade code from storage hardware, e.g. storage hardware 405 as depicted in the kit 400 of Figure 4. The upgrade code may comprise second configuration data that is derived from the first configuration data. The first configuration data may have been uploaded to the storage hardware 405 in a previous step. The second configuration data may be the same as the first configuration data, but the example embodiment described herein the second configuration data is a translation of the at least part of the first configuration data from one format to another, e.g. from a memory map that maps parameters to specific memory addresses, to a database file. The translation may involve a manual (e.g. via an interface application) or, in some implementations, automatic, changing of some of the alarm system configuration defined by the first configuration data. For example, an address defined by the first configuration data may be a first network address, e.g. an IP address, of a remote device 140, but the address may be swapped with a different address so that after the upgrade the upgraded control hub is configured to communicate with a different remote device (e.g. a different server) instead of remote device 140 at the first network address.

Step 520 may comprise storing the upgrade code in a memory of the apparatus 305. For example, in an embodiment the upgrade code is downloaded from the remote storage hardware 405, wherein the remote storage hardware 405 is a server or cloud storage system, and then stored in the memory of the apparatus 305.

In some embodiments an intermediate storage device (not shown) may be used to download the upgrade code from the remote storage hardware 405, and subsequently used to copy the downloaded upgrade code to a memory of the upgraded control hub 300. For example, the intermediate storage device may be a computer at the factory or workshop. The intermediate storage device may be a computer such as an installation engineer's laptop. The intermediate storage device may be a mobile device, such as a cellular phone, or the like.

The method comprises a second step 530 of using the upgrade code to configure the second processor 310 to execute at least one of the one or more functions that had been performed by the first processor 205. This may be achieved for example by the upgrade code comprising software and/or the second configuration data. For example, second processor 310 may be configured to execute the at least one of the one or more functions may be defined by the software, or an optional function of the software may be enabled by the second configuration data, or the second configuration data may itself define at least one of the one or more functions.

In some embodiments, the method comprises a step of storing further code in the memory 215 of the upgraded control hub 300. The further code is downloaded from storage hardware, e.g. remote storage hardware 405 or another storage hardware, and stored in the memory 215 of the control hub 300. The further code is for reconfiguring the first processor 205 to communicate with the second processor 310. In some embodiments, the further code is stored in the memory 215 before incorporating the apparatus 300 into the control hub 200 to form the upgraded control hub 300. In some embodiments, the further code is stored in the memory 215 after incorporating the apparatus 300 into the control hub 200 to form the upgraded control hub 300. The further code enables communication between the first processor 205 and the second processor 310 by repurposing the communication lines 290. Furthermore, in an embodiment the further code reconfigures the first processor 205 to use a different protocol for communicating over the communication lines 290 than a protocol that was originally used for communication between the first processor 205 and the first cellular communication means 210. The further code also reconfigures the first processor 205 to act as an I/O interface between the second processor 310 and one or more of the peripheral devices (e.g. buttons, LEDs, speaker, microphone, etc) that are part of the control hub 200 so that such devices may be controlled by the second processor 310.

The further code may be installed as a separate step to the installation of the upgrade code. For example the further code and the upgrade code bay be distinct entities stored on the remote storage hardware 405. However, in other embodiments the further code may include the upgrade code, whereby once the first processor 205 is reconfigured by a first part of the upgrade code, the first processor 205 may communicate the configuration to be used the second processor 310 onto a memory on the apparatus 305. The communication of the configuration may be via the communication lines 290, repurposed by the further code. In embodiments in which the second configuration data is not the same as the first configuration data, the first configuration data may be translated to the second configuration data by the reconfigured first processor 205 or by second processor 310. Optionally software may be preinstalled on the apparatus 305 for execution by the second processor 310 to translate the first configuration data in embodiments in which the first configuration data is received by the second processor 310 via communication lines 290.

In an embodiment, the first cellular communication means 210 is a 3G communication means, which is upgraded according to the disclosed method by the second cellular communication means 315, which is an LTE cellular communication means.

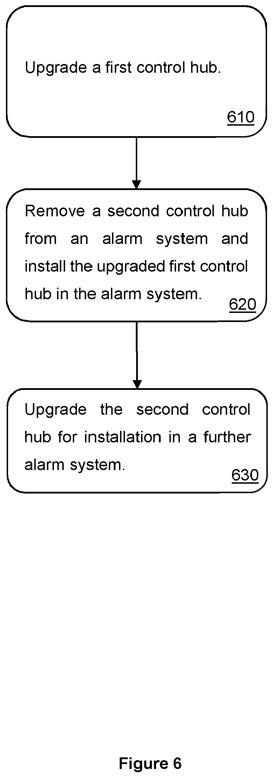

Figure 6 depicts a further method of upgrading an alarm system 100, according to an embodiment of the disclosure.

In a first step 610, a first control hub 200 is upgraded to form an upgraded control hub 300, in accordance with the method of Figure 5. The first step 610 may be performed at a different location to the alarm system 100 to be upgraded. For example, the control hub 200 may be upgraded to form an upgraded control hub 300 at a workshop or factory that is remote from a premises in which the alarm system 100 is installed.

In a second step 620, a second control hub is removed, e.g. uninstalled, from the alarm system 100. The upgraded control hub 300 is then installed in the alarm system 100.

Further software updates to the upgraded control hub 300 may be performed after installation of the upgraded control hub 300 in the alarm system 100.

In a subsequent step 630, the second control hub can be upgraded to form a second upgraded control hub 300, in accordance with the method of Figure 7. That is, the second control hub may be taken to the factory or workshop for upgrading. The second upgraded control hub may subsequently be installed in a different alarm system.

The Applicant discloses in isolation each individual feature described herein and any combination of two or more such features, to the extent that such features or combinations are capable of being carried out based on the specification as a whole in the light of the common general knowledge of a person skilled in the art, irrespective of whether such features or combinations of features solve any problems disclosed herein, and without limitation to the scope of the claims. The applicant indicates that aspects of the disclosure may consist of any such individual feature or combination of features. In view of the foregoing description it will be evident to a person skilled in the art that various modifications may be made within the scope of the disclosure.

Although the disclosure has been described in terms of particular embodiments as set forth above, it should be understood that these embodiments are illustrative only and that the claims are not limited to those embodiments. Those skilled in the art will be able to make modifications and alternatives in view of the disclosure, which are contemplated as falling within the scope of the appended claims. Each feature disclosed or illustrated in the present specification may be incorporated in any embodiments, whether alone or in any appropriate combination with any other feature disclosed or illustrated herein.

Furthermore, various but not necessarily all aspects of the present disclosure may be defined the following clauses.

### CLAUSES

1. A method of upgrading a control hub for an alarm system, the method comprising the steps of:
   - incorporating into the control hub an apparatus for upgrading the control hub, the control hub comprising:
   - a first cellular communication means for communicating with one or more remote devices;
   - a memory having code stored thereon, the code comprising software, wherein one or more functions for controlling an alarm system are defined at least in part by the software, and
   - a first processor configured to process the code;
   - the apparatus comprising a second processor and a second cellular communication means for communicating with one or more remote devices, and coupling the second processor to the first processor;
   - receiving upgrade code from storage hardware and using said upgrade code to configure the second processor to execute at least one of the one or more functions.
2. The method of clause 1, wherein the memory further comprises first configuration data and the upgrade code comprises second configuration data for use by the second processor, wherein the second configuration data at least partly corresponds to:
   the first configuration data; or
   configuration data from a different control hub for an alarm system.
3. The method of clause 2 comprising a step of parsing and/or translating and/or reformatting at least a portion of the first configuration data or the configuration data from the different control hub to provide at least a portion of the second configuration data.
4. The method of any preceding clause, comprising a step of storing the upgrade code in a memory of the apparatus.
5. The method of clause any preceding clause, comprising a step of storing further code in the memory of the control hub, wherein the further code is for reconfiguring the first processor to communicate with the second processor and to receive commands from the second processor.
6. The method of any preceding clause wherein the control hub comprises communication lines between the first processor and the first cellular communication means, and wherein the method comprises a step of communicably coupling the second processor to the communication lines.
7. The method of clause 6, comprising a step of reconfiguring the first processor to use a different protocol for communicating over the communication lines.
8. The method of any preceding clause, comprising a step of decoupling the first cellular communication means from the control hub.
9. The method of any preceding clause wherein the upgrade code is received by a processing device, wherein the processing device is configured to store the upgrade code in the memory of the apparatus.
10. The method of any preceding clause wherein the control hub comprises a first further communication means for communicating with one or more further devices, wherein the apparatus comprises a second further communication means for communicating with the one or more further devices, and wherein the method comprises a step of:
   - uninstalling and/or disabling the first further communication means; and/or
   - configuring the second further communication means to replace or complement the first further communication means.
11. The method of clause 10, wherein the second further communication means comprises an RF module for wirelessly communicating with one or more peripheral devices, and the second processor is configured to control the second further communication means.
12. The method of any preceding clause wherein the first cellular communication means is a 3G communication means, and the second cellular communication means is a 4G, LTE or 5G cellular communication means.
13. The method of any preceding clause, comprising a step of reconfiguring the first processor as an I/O processor for controlling I/O of the control hub.
14. The method of any preceding clause, wherein the first processor is reconfigured to be a slave to with the second processor is a master.
15. The method of any preceding clause, wherein the first and/or second configuration data corresponds to one or more of:
   rules defining a behavior and/or configuration of the alarm system in response to signals from one or more peripheral devices;
   a configuration of one or more peripheral devices coupled to the processor and/or the processing circuitry;
   encryption keys and/or pin codes and/or identification codes and/or address information and/or user information;
   a process of parsing data packets received by one or more peripheral devices;
   a state machine and/or script defining an operation of the processor and/or the processing circuitry;
   dial sequence information.
16. The method of any preceding clause, wherein the second processor is a more powerful processor than the first processor.
17. The method of any preceding clause, wherein the second processor is configured to execute one or more functions that the first processor was not configured to execute prior to incorporating the apparatus into the control hub.
18. The method of clause 19, wherein the one or more functions comprise functions relating to communication using HTTPS and/or MQTT.
19. A method of upgrading an alarm system, the method comprising a step of operatively replacing an original control hub for the alarm system with an upgraded control hub for the alarm system, wherein the upgraded control hub is a control hub that been upgraded according to the method of any of clauses 1 to 10.
20. The method of clause 11, wherein the upgraded control hub comprises configuration data at least partly corresponding to configuration data from the original control hub.
21. A kit for assembling an upgraded control hub of an alarm system, the kit comprising:
   (a) a control hub for upgrading, the control hub comprising:
      - a first cellular communication means for communicating with one or more remote devices;
      - a memory having code stored thereon, the code comprising software, wherein one or more functions for controlling an alarm system are defined at least in part by the software; and
      - a first processor configured to process the code;
   (b) an apparatus for incorporation into the control hub, the apparatus comprising:
      a second processor; and
      a second cellular communication means for communicating with one or more remote devices;
         wherein the apparatus is configured for coupling the second processor to the first processor; and
   (c) storage hardware having upgrade code stored thereon for configuring the second processor to execute at least one of the one or more functions.
22. The kit according to clause 21, wherein the memory further comprises first configuration data and the upgrade code comprises second configuration data for use by the second processor, the second configuration data at least partly corresponding:
   the first configuration data; or
   configuration data from a different control hub for an alarm system.
23. The kit according to clause 21 or 22, wherein the apparatus comprises a memory for storing the upgrade code and/or the second configuration data.
24. The kit according to any of clauses 21 to 23 wherein the control hub comprises communication lines between the first processor and the first cellular communication means, and wherein the apparatus comprises means for communicably coupling the first processor to the communication lines.
25. The kit according to any of clauses 21 to 24, comprising further code for storing in the memory of the control hub to reconfigure the first processor to:
   communicate with the second processor; and/or
   to receive commands from the second processor.
26. The kit according to clause 25 wherein the further code is for changing a communication protocol used to communicate over the communication lines.
27. The kit according to any of clauses 21 to 26 wherein the first processor is configured to communicate with the first cellular communication means using AT commands.
28. The kit according to any of clauses 21 to 27, wherein the storage hardware is remote from the apparatus.
29. The kit according to any of clauses 21 to 28, wherein the control hub comprises first further communication means for communicating with one or more further devices, and wherein the apparatus comprises second further communication means for communicating with the one or more further devices.
30. The kit according to clause 29, wherein the one or more further devices comprises at least one of:
   a camera, a motion sensor, a door sensor, a window sensor, a lock, an alarm sounder, a passive infrared sensor, a touchscreen, a display, a speaker, a microphone, a light; user interface; a radio transceiver, a non-volatile memory; a volatile memory; and/or an actuator.
31. The kit according to clause 29 or 30, wherein the second further communication means comprises at least one of:
   - a transceiver for a wireless personal area network (WPAN) coupled to the second processor; and/or
   - a transceiver for a wireless local area network (WLAN) coupled to the second processor.
32. The kit according to any of clauses 29 to 31, wherein the upgrade code configures the second processor to operate a rules engine and/or execute the one or more functions to control interaction between the second processor and the one or more further devices.
33. The kit according to any of clauses 21 to 32, wherein the one or more functions and/or the first and/or second configuration data correspond to at least one of:
   - rules defining a behavior and/or configuration of the alarm system in response to signals from one or more peripheral devices;
   - a configuration of one or more peripheral devices coupled to the processor and/or the second processor;
   - encryption keys and/or pin codes and/or identification codes and/or address information and/or user information;
   - a process of parsing data packets received by one or more peripheral devices;
   - a state machine and/or script defining an operation of the processor and/or the second processor;
   - dial sequence information.
34. The kit according to any of clauses 21 to 33, wherein the second processor is configured to communicate via the second cellular communication means using HTTPS and/or MQTT.
35. The kit according to any of clauses 21 to 34, wherein the upgrade code comprises code and/or data defining an operating system for execution by the second processor.
36. A system for implementing the method of clause 1 of upgrading a control hub for an alarm system, the system comprising:
   (a) an apparatus for incorporation into a control hub for an alarm system, the apparatus comprising:
      a processor; and
      a communication means for communicating with one or more remote devices;
      wherein the apparatus is configured for coupling the processor to a processor of the control hub; and
   (b) storage hardware storing upgrade code for configuring the processor to execute one or more functions, wherein the one or more functions correspond to functions executed by the processor of the control hub.

## Claims

1. A kit for assembling an upgraded control hub of an alarm system, the kit comprising:
(a) a control hub for upgrading, the control hub comprising:
a first cellular communication means for communicating with one or more remote devices;
a memory having code stored thereon, the code comprising software, wherein one or more functions for controlling an alarm system are defined at least in part by the software; and
a first processor configured to process the code;
(b) an apparatus for incorporation into the control hub, the apparatus comprising:
a second processor; and
a second cellular communication means for communicating with one or more remote devices;
wherein the apparatus is configured for coupling the second processor to the first processor; and
(c) storage hardware having upgrade code stored thereon for configuring the second processor to execute at least one of the one or more functions.

2. The kit according to claim 1, wherein the memory further comprises first configuration data and the upgrade code comprises second configuration data for use by the second processor, the second configuration data at least partly corresponding:
the first configuration data; or
configuration data from a different control hub for an alarm system.

3. The kit according to claim 1 or 2 wherein the control hub comprises communication lines between the first processor and the first cellular communication means, and wherein the apparatus comprises means for communicably coupling the first processor to the communication lines.

4. The kit according to any of claims 1 to 3, comprising further code for storing in the memory of the control hub to reconfigure the first processor to:
communicate with the second processor; and/or
to receive commands from the second processor,
wherein the further code is for changing a communication protocol used to communicate over the communication lines, wherein the first processor is configured to communicate with the first cellular communication means using AT commands.

5. The kit according to any of claims 1 to 4, wherein the control hub comprises first further communication means for communicating with one or more further devices, and wherein the apparatus comprises second further communication means for communicating with the one or more further devices, wherein the one or more further devices comprises at least one of:
a camera, a motion sensor, a door sensor, a window sensor, a lock, an alarm sounder, a passive infrared sensor, a touchscreen, a display, a speaker, a microphone, a light; user interface; a radio transceiver, a non-volatile memory; a volatile memory; and/or an actuator.

6. A method of upgrading a control hub for an alarm system, the method comprising the steps of:
- incorporating into the control hub an apparatus for upgrading the control hub, the control hub comprising:
∘ a first cellular communication means for communicating with one or more remote devices;
∘ a memory having code stored thereon, the code comprising software, wherein one or more functions for controlling an alarm system are defined at least in part by the software, and
∘ a first processor configured to process the code;
- the apparatus comprising a second processor and a second cellular communication means for communicating with one or more remote devices, and coupling the second processor to the first processor;
- receiving upgrade code from storage hardware and using said upgrade code to configure the second processor to execute at least one of the one or more functions.

7. The method of claim 6, wherein the memory further comprises first configuration data and the upgrade code comprises second configuration data for use by the second processor, wherein the second configuration data at least partly corresponds to:
the first configuration data; or
configuration data from a different control hub for an alarm system.

8. The method of claim 7 comprising a step of parsing and/or translating and/or reformatting at least a portion of the first configuration data or the configuration data from the different control hub to provide at least a portion of the second configuration data.

9. The method of any of claims 6 to 8, comprising a step of storing further code in the memory of the control hub, wherein the further code is for reconfiguring the first processor to communicate with the second processor and to receive commands from the second processor.

10. The method of any of claims 6 to 9 wherein the control hub comprises communication lines between the first processor and the first cellular communication means, and wherein the method comprises a step of communicably coupling the second processor to the communication lines and a step of reconfiguring the first processor to use a different protocol for communicating over the communication lines.

11. The method of any of claims 6 to 10, comprising a step of decoupling the first cellular communication means from the control hub.

12. The method of any of claims 6 to 11 wherein the first cellular communication means is a 3G communication means, and the second cellular communication means is a 4G, LTE or 5G cellular communication means.

13. The method of any of claims 6 to 12, wherein the first processor is reconfigured to be a slave to with the second processor is a master.

14. A method of upgrading an alarm system, the method comprising a step of operatively replacing an original control hub for the alarm system with an upgraded control hub for the alarm system, wherein the upgraded control hub is a control hub that been upgraded according to the method of any of claims 6 to 13, wherein the upgraded control hub comprises configuration data at least partly corresponding to configuration data from the original control hub

15. A system for implementing the method of any of claims 6 to 13 of upgrading a control hub for an alarm system, the system comprising:
(a) an apparatus for incorporation into a control hub for an alarm system, the apparatus comprising:
a processor; and
a communication means for communicating with one or more remote devices;
wherein the apparatus is configured for coupling the processor to a processor of the control hub; and
(b) storage hardware storing upgrade code for configuring the processor to execute one or more functions, wherein the one or more functions correspond to functions executed by the processor of the control hub.
